# EUROPEAN PATENT SPECIFICATION

(11) **EP 2 650 171 B1**
(45) Date of publication and mention of the grant of the patent: **15.02.2017**
(21) Application number: 10860489.3
(22) Date of filing: 10.12.2010
(51) Int. Cl.: B60P 7/13, B63B 25/22, B63B 25/28, B63B 25/24

(54) **ROD FIXER FOR SHIP CONTAINERS**
STANGENFIXIERER FÜR SCHIFFCONTAINER
DISPOSITIF DE FIXATION À TIGE POUR CONTENEURS DE BATEAU

(43) Date of publication of application: 16.10.2013
(73) Proprietor: Ma, Jung-En, Xizhi City, Taipei County (TW); Minato Seiki Iron Works Co., Ltd., Takatsuki City, Osaka (JP)
(72) Inventor: Ma, Jung-En, Xizhi City, Taipei County (TW)
(74) Representative: Grünecker Patent- und Rechtsanwälte PartG mbB
(86) International application number: PCT/CN2010/002018
(87) International publication number: WO 2012/075613

(56) References cited:
- CN-A- 1 781 807
- DE-A1- 10 108 519
- DE-U1- 8 911 098
- DE-U1- 9 208 803
- DE-U1- 20 307 918
- DE-U1- 29 818 650
- TW-B- 489 042
- TW-U- 592 198

## Description

### Field of the Invention

The present invention relates to container, and particularly to a rod fixer through which containers may be stably located on a ship.

### Related Art

DE 92 08 803 **refers to a helping device for a latching connecting rod 2 via a fixing member 4. The helping device comprises U-shaped bracket with which the fixing member 4 can be rotated for biasing the connecting rod 2. The connecting rod 2 comprising a plurality of locating blocks 24 at intervals wherein one of same can be placed on a locating seat 6 of the fixing member 4.**

DE 298 18 650 U **refers to a latching device for a container wherein a fixing member 4 comprises a main locating seat 4 comprising a pivotable part which locating seat 4 is provided on an inner side with a screw thread 6 for engaging an end portion of a connecting rod, which end portion of the connecting rod also comprises a screw thread to be engaged with the screw thread of the locating seat 4.**

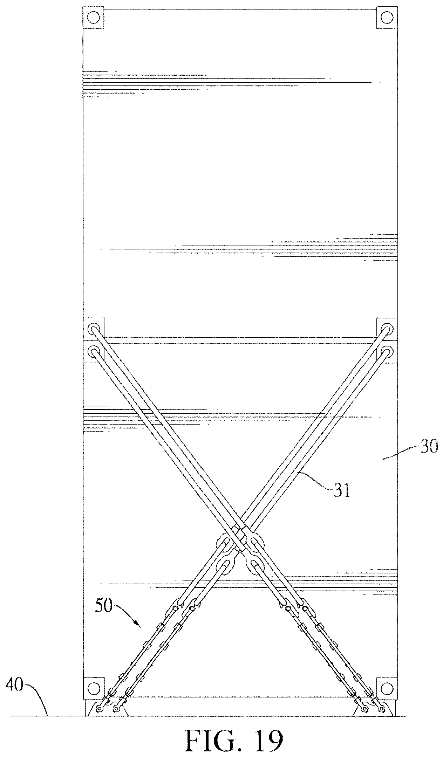

Containers are a standardized transport vehicle holder whose internal space may contain cargo, and the containers may be stacked on a ship, so as to provide the maritime transport service. In order to prevent the situation that the stacked containers slip into water due to ship swing during ship sailing from occurring, referring to FIG. 19, a container fixing manner in the first prior art is shown, in which a rod 31 is connected into a through hole at a corner of each container 30, a fixer 50 is connected onto a deck 40 of a ship relative to the location of each container 30, and the fixer 50 and the rod 31 are hooked with each other, so that each container 30 may be located stably on the deck 40 of the ship.

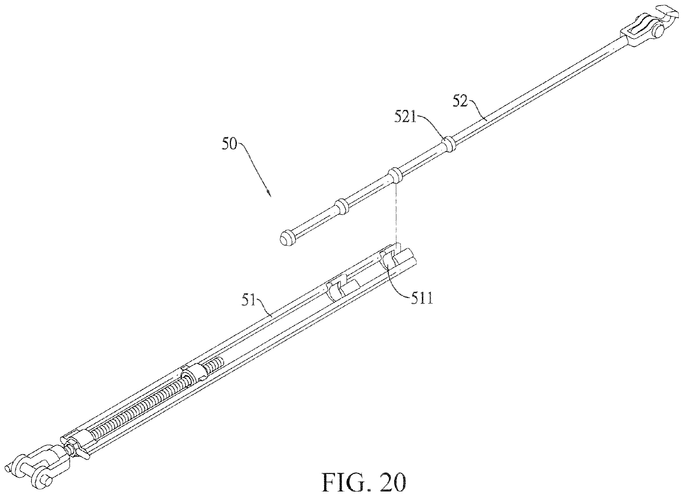

Referring to FIG. 20, a rod fixer 50 in another prior art is shown, whose main structure is as follows: a connecting rod 52 is sleeved in a fixing member 51, the both are made of a metal rod part, the fixing member 51 is formed with a plurality of locating slots 511, the other end of the fixing member 51 relative to a locating slot 511 may be connected to onto a deck, the connecting rod 52 is formed with a plurality of locating blocks 521 axially at intervals, the other end of the connecting rod 52 relative to a locating block 521 is provided with a connection part, and the connection part may be sleeved in a through hole at a corner of a container 30. During use, the locating block 521 is locked into the locating slot 511, so that the fixing member 51 and the connecting rod 52 are connected to each other, and locating blocks 521 at different locations are disposed in locating slots 511 at different locations, the length of the rod fixer 50 may be adjusted, so as to conform to use demands for various different lengths.

However, the foregoing rod fixer 50 has the following disadvantages during practical use: only the locating block 521 of the connecting rod 52 is locked into the locating slot 511 of the fixing member 51, and no fixing structure exists between the fixing member 51 and the connecting rod 52, so when the maritime meteorology is undesired and the ship is strongly impacted by the sea wave so as to substantially swing, not only the ship itself swings in an indeterminate direction, but also the outer shell of the container is instantaneously deformed, so that the fixing member 51 and the connecting rod 52 easily loosen due to the swing of the ship and relative instantaneous deformation of the outer shell of the container, or even disengage from each other, so as to cause the disadvantage that each container 30 cannot be safely and stably located during use; and in the case that the fixing member 51 and the connecting rod 52 are disengaged from each other, not only a container loses balance due to the swing of the ship and drops into the water to cause a loss, but also the personnel on the ship may be hurt, so safety misgivings exist.

### SUMMARY OF THE INVENTION

In view of the disadvantages in the prior art, the inventive objective of the present invention lies in providing a rod fixer for ship containers, in which a buckle handle is designed on a fixing member, the buckle handle is manipulated to enable the fixing member and the connecting rod to be firmly located and not separate from each other, so as to provide preferable stability during use.

**The object is solved according to the invention by means of a rod fixer according to claim 1. Advantageously embodiments can be derived form the sublaims.**

The rod fixer for ship containers designed in the present invention includes a fixing member and a connecting rod, in which: the fixing member is provided with a main locating seat, the main locating seat is formed with a via hole facing a front side and being of an opening shape, the main locating seat is provided with a fastening element provided with a block, and an upper end aperture of the via hole is less than a lower end aperture thereof; and a rod wall of the connecting rod is protruded with a plurality of locating blocks at intervals, each locating block is formed with at least one clamping part, the connecting rod is sleeved in the fixing member, and the block of the fastening element is locked into the clamping part of the locating block.

In the rod fixer for ship containers, the main locating seat is formed with a pivoting part and an abutting part, the pivoting part is pivoted with a buckle handle, the buckle handle is protruded with the block, and a step face is formed between the upper end aperture and the lower end aperture of the via hole, so that a locating block is located in the via hole of the main locating seat and abuts against the step face of the via hole.

In the rod fixer for ship containers, an end face of the pivoting part of the main locating seat is penetrated with a combining hole, the front side of the pivoting part is cut to form a groove, the groove is in communication with the combining hole, one end of the buckle handle is a pivoting end, the other end is an abutting end, the pivoting end is penetrated with a pivoting hole, and the pivoting end is located in the groove of the main locating seat, so that the pivoting hole of the pivoting end corresponds to the combining hole of the main locating seat, a pivoting member runs through the combining hole of the main locating seat and is pivoted with the pivoting hole of the pivoting end, and the abutting end at the other end of the buckle handle is located at the abutting part of the main locating seat.

In the rod fixer for ship containers, the pivoting member and the outside of the pivoting end of the buckle handle are disposed with a torsion spring, the torsion spring straddles the outside of the pivoting end, two ends of the torsion spring separately wind the outside of the top end and the bottom end of the pivoting member, and the two ends of the torsion spring abut against grooves face of the groove.

In the rod fixer for ship containers, the abutting part of the main locating seat is recessed to form a concave portion relative to the external side away from the via hole, the front side of the abutting part is cut to form a slot, the abutting end of the buckle handle is located in the slot of the main locating seat, the top face of the end portion of the abutting end is recessed with a groove, the groove sequentially contains a spring and a bead, and the bead is capable of clamping the concave portion located in main locating seat.

In the rod fixer for ship containers, the locating block of the connecting rod is provided with a ring, at least one rib is formed between the bottom face of the ring and the rod wall of the connecting rod, and the clamping part is formed between the rib and the bottom face of the ring.

In the rod fixer for ship containers, the fixing member is further provided with an auxiliary locating seat, the auxiliary locating seat is formed with a via hole facing a front side and being of an opening shape, an upper end aperture of the via hole of the auxiliary locating seat is less than a lower end aperture thereof, and a step face is formed between the upper end aperture and the lower end aperture, the via hole of the auxiliary locating seat contains a corresponding locating block, and the step face of the auxiliary locating seat is capable of abutting against the corresponding locating block.

In the rod fixer for ship containers, the fixing member is provided with two rod bodies disposed at an interval, top ends of the two rod bodies are connected with the main locating seat, and the auxiliary locating seat is connected between the two rod bodies and below the main locating seat.

In the rod fixer for ship containers, bottom ends of the two rod bodies of the fixing member are connected with a connection seat, the connection seat is penetrated with a screw hole, the screw hole is combined with a screw rod, the bottom end of the screw rod is provided with a connecting part, and the top end of the connecting rod is provided with a hook.

In the rod fixer for ship containers, the pivoting part of the main locating seat is provided with a transverse containing hole relative to the end face of the via hole of the abutting part, the pivoting part is pivoted with a buckle handle, one end of the buckle handle is a pivoting end, the buckle handle is protruded with the block, one end of the pivoting end is provided with a radial concave hole, the concave hole is capable of being inserted with an abutting column, the abutting column is capable of passing through an abutting through hole at a lower end face of the pivoting part and is inserted and fixed in the concave hole, the pivoting end is sleeved with an abutting spring, the abutting column is capable of compressing the abutting spring and is located at the pivoting end, the appearance of the block of the buckle handle is approximately of a shape of one fourth circular sheet, and one end of the block is protruded with a dialing block, the pivoting end of the buckle handle and the abutting spring are disposed in the containing hole, and the block of the buckle handle is located in the via hole.

In the rod fixer for ship containers, the locating block of the connecting rod is provided with a ring, a plurality of ribs is formed between the bottom face of the ring and the rod wall of the connecting rod, and the clamping part is formed between adjacent ribs.

In the rod fixer for ship containers, the fixing member is further provided with an auxiliary locating seat, the auxiliary locating seat is formed with a via hole facing a front side and being of an opening shape, an upper end aperture of the via hole of the auxiliary locating seat is less than a lower end aperture thereof, and a step face is formed between the upper end aperture and the lower end aperture, the via hole of the auxiliary locating seat contains a corresponding locating block, and the step face of the auxiliary locating seat is capable of abutting against the corresponding locating block.

In the rod fixer for ship containers, the fixing member is provided with two rod bodies disposed at an interval, top ends of the two rod bodies are connected with the main locating seat, and the auxiliary locating seat is connected between the two rod bodies and below the main locating seat.

In the rod fixer for ship containers, bottom ends of the two rod bodies of the fixing member are connected with a connection seat, the connection seat is penetrated with a screw hole, the screw hole is combined with a screw rod, the bottom end of the screw rod is provided with a connecting part, and the top end of the connecting rod is provided with a hook.

The rod fixer for ship containers provided in the present invention may achieve advantages and efficacy improvements which at least include: the main locating seat is formed with a fastening element, and the fastening element is manipulated to enable the block to be correspondingly locked into the clamping part of the locating block, so that the fixing member and the connecting rod may be firmly located with each other, and the connecting rod cannot rotate or move relative to the fixing member; therefore even if the ship violently swings and the outer shell of a container is relatively instantaneously deformed, the rod fixer still can provide the stable use effect, so that the container may be stably located on the ship, and meanwhile the preferable safety is also provided.

### BRIEF DESCRIPTION OF THE DRAWINGS

The present invention will become more fully understood from the detailed description given herein below for illustration only, and thus are not limitative of the present invention, and in which:
FIG. 1 is a three-dimensional outside view according to a first embodiment of the present invention;
FIG. 2 is a partially exploded view according to the first embodiment of the present invention;
FIG. 3 is a partially lateral cross-sectional view according to the first embodiment of the present invention;
FIG. 4 is a cross-sectional bottom view according to the first embodiment of the present invention;
FIG. 5 is a cross-sectional bottom view of another action according to the first embodiment of the present invention;
FIG. 6 is a three-dimensional outside view according to a second embodiment of the present invention;
FIG. 7 is a partially exploded view according to the second embodiment of the present invention;
FIG. 8 is a partially lateral cross-sectional view according to the second embodiment of the present invention;
FIG. 9 is a cross-sectional bottom view according to the second embodiment of the present invention;
FIG. 10 is a cross-sectional bottom view of another action according to the second embodiment of the present invention;
FIG. 11 is a partially exploded view according to a third embodiment of the present invention;
FIG. 12 is a partially three-dimensional outside view according to the third embodiment of the present invention;
FIG. 13 is a partially lateral cross-sectional view according to the third embodiment of the present invention;
FIG. 14 is a cross-sectional bottom view according to the third embodiment of the present invention;
FIG. 15 is a partially exploded view according to a fourth embodiment of the present invention;
FIG. 16 is a partially three-dimensional outside view according to the fourth embodiment of the present invention;
FIG. 17 is a partially lateral cross-sectional view according to the fourth embodiment of the present invention;
FIG. 18 is a cross-sectional bottom view according to the fourth embodiment of the present invention;
FIG. 19 is a use state diagram according to a prior art; and
FIG. 20 is an exploded view according to another prior art.

Illustration of reference numerals of accompanying drawings: 10 fixing member; 11 rod body; 12 main locating seat; 121 via hole; 1211 step face; 122 pivoting part; 1221 combining hole; 1222 groove; 123 abutting part; 1231 concave portion; 1232 slot; 13, 13A buckle handle; 131, 131 A pivoting end; 1311 pivoting hole; 1312 concave hole; 1313A butting column; 132 abutting end; 1321 groove; 1322 spring; 1323 bead; 133, 133A block; 1331 dialing block; 134 pivoting member; 135 torsion spring; 136 pivoting part; 1361 containing hole; 137 abutting part; 138 abutting spring; 139 abutting through hole; 14 auxiliary locating seat; 141 via hole; 1411 step face; 15 connection seat; 16 screw rod; 17 connecting part; 20 connecting rod; 21 locating block; 211 ring; 212 rib; 213 clamping part; 22 hook; 30 container; 31 rod; 40 deck; 50 fixer; 51 fixing member; 511 locating slot; 52 connecting rod; and 521 locating block.

### DETAILED DESCRIPTION OF THE INVENTION

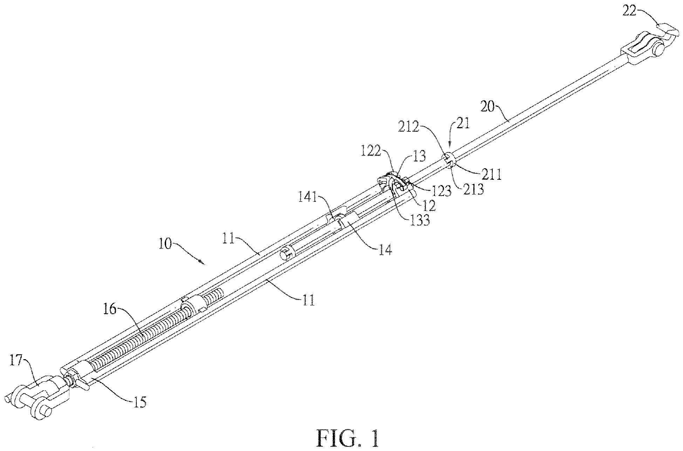

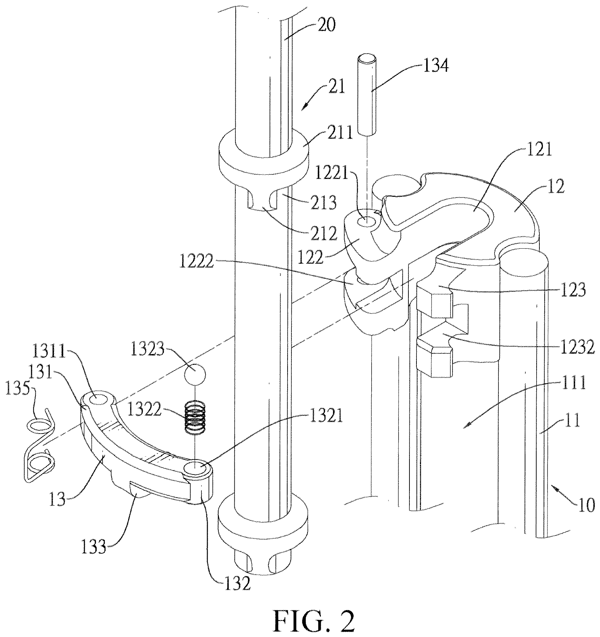

Referring to FIG. 1 to FIG. 3, a first embodiment of a rod fixer for ship containers according to the present invention is shown, which includes a fixing member 10 and a connecting rod 20.

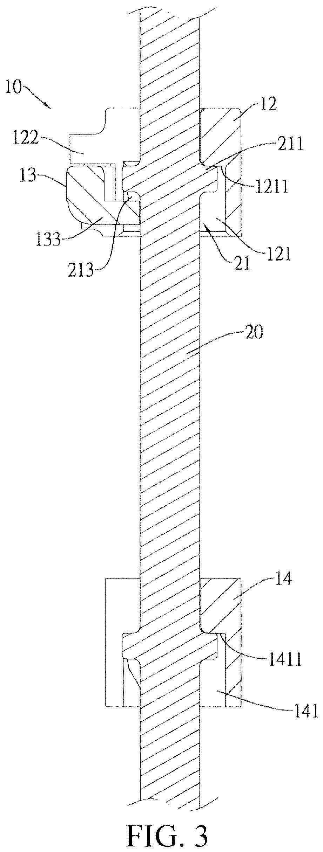

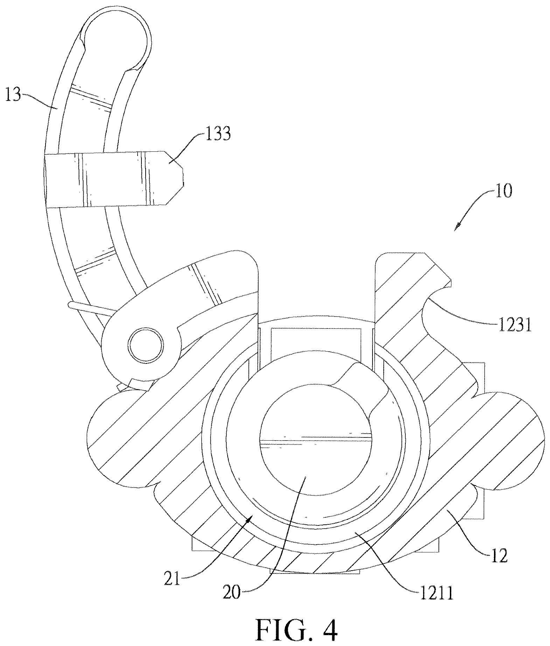

The fixing member 10 is provided with two rod bodies 11 disposed in parallel and at an interval, the top end of the two rod bodies 11 is connected with a main locating seat 12, the main locating seat 12 is formed with an axial via hole 121, the via hole 121 faces the front side and is of an opening shape, and the main locating seat 12 is provided with a fastening element. In this embodiment, the fastening element enables the main locating seat 12 to be formed with a pivoting part 122 and an abutting part 123, the end face of the pivoting part 122 is penetrated with an axial combining hole 1221, the front side of the pivoting part 122 is cut to form a radial groove 1222, the groove 1222 is in communication with the combining hole 1221, and the abutting part 123 is recessed to form a concave portion 1231 relative to the external side away from the via hole 121 (as shown in FIG. 4). The front side of the abutting part 123 is cut to form a radial slot 1232, furthermore the via hole 121 is in communication with the groove 1222 of the pivoting part 122 and the slot 1232 of the abutting part 123, the upper end aperture of the via hole 121 is less than the lower end aperture, and a step face 1211 is formed between the upper and lower end apertures (as shown in FIG. 3).

The main locating seat 12 is pivoted with a buckle handle 13, one end of the buckle handle 13 is a pivoting end 131, the other end is an abutting end 132, the pivoting end 131 is penetrated with an axial pivoting hole 1311, the top face of the end portion of the abutting end 132 is recessed with a groove 1321, the groove 1321 sequentially contains a spring 1322 and a bead 1323, the bead 1323 abutted by the spring 1322 only may move in the groove 1321, and a part of the bead protrudes out of the top face of the groove 1321 (this construction is in the prior art and is not described again). The center of the bottom face of the buckle handle 13 is protruded with a block 133 in a radial manner, the pivoting end 131 is located in the groove 1222 of the main locating seat 12, and the abutting end 132 is located in the slot 1232 of the main locating seat 12, so that the pivoting hole 1311 of the pivoting end 131 corresponds to the combining hole 1221 of the main locating seat 12, a pivoting member 134 runs through the combining hole 1221 of the main locating seat 12 and the pivoting hole 1311 of the pivoting end 131, and the buckle handle 13 is pivoted on the main locating seat 12. The pivoting member 134 and the outside of the pivoting end 131 are disposed with a torsion spring 135, the torsion spring 135 straddles the outside of the pivoting end 131, two ends of the torsion spring 135 separately wind outsides of the top end and the bottom end of the pivoting member 134, and the two ends of the torsion spring 135 abut against groove faces of the groove 1222, the torsion spring 135 is provided with an elastic force to close the buckle handle 13, and the bead 1323 of the abutting end 132 may clamp the concave portion 1231 located in the main locating seat 12.

An auxiliary locating seat 14 is connected between two rod bodies 11 and below the main locating seat 12, the auxiliary locating seat 14 is formed with an axial via hole 141, the via hole 141 faces the front side and is of an opening shape, and the upper end aperture of the via hole 141 is less than the lower end aperture, and a step face 1411 is formed between the upper and lower end apertures (as shown in FIG. 3). The bottom end of the two rod bodies 11 is connected with a connection seat 15, the connection seat 15 is penetrated with an axial screw hole (not shown in the drawing), the screw hole is combined with a screw rod 16, the bottom end of the screw rod 16 is provided with a connecting part 17, and the fixing member 10 is fixed on a deck of a ship through the connecting part 17.

The connecting rod 20 is a rod body, the rod wall thereof is protruded with a plurality of locating blocks 21 axially at intervals, each locating block 21 is provided with a ring 211, a rib 212 is formed between the bottom face of the ring 211 and the rod wall of the connecting rod 20, a clamping part 213 is formed between the bottom face of the ring 211 and the rib 212, additionally the top end of the connecting rod 20 is provided with a hook 22, the hook 22 may hook a through hole disposed at a corner of a container, and the connecting rod 20 is sleeved in the fixing member 10, so that a locating block 21 is located in the via hole 121 of the main locating seat 12, and the block 133 of the buckle handle 13 is locked into the clamping part 213 of the locating block 21; another locating block 21 is located in the via hole 141 of the auxiliary locating seat 14.

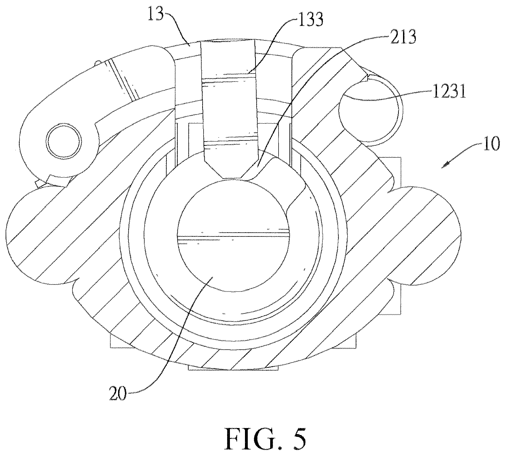

Referring to FIG. 3 and FIG. 4, during practical use of the present invention, the rod bodies of the connecting rod 20 are correspondingly disposed in the via hole 121 of the main locating seat 12 of the fixing member 10 and the via hole 141 of the auxiliary locating seat 14, and the connecting rod 20 is moved in a direction away from the fixing member 10, so that different locating blocks 21 may separately abut against the step face 1211 of the via hole 121 of the main locating seat 12 and the step face 1411 of the via hole 141 of the auxiliary locating seat 14. Referring to FIG. 5 cooperatively, further, the buckle handle 13 is manipulated, so that the block 133 of the buckle handle 13 is correspondingly locked into the clamping part 213 of the locating block 21, the bead 1323 of the buckle handle 13 clamps the concave portion 1231 located in the main locating seat 12, the spring 1322 provides an elastic force to enable the bead 1323 to tightly abut against the concave portion 1231. In this way, the locating block 21 is locked into the main locating seat 12, so the connecting rod 20 may be firmly fixed on the fixing member 10 and cannot rotate or move, further the containers may be stably stacked on the ship, and preferable safety is provided. Additionally, the locating blocks 21 at different locations are disposed in the main locating seat 12, the length of the rod fixer 10 may be adjusted, the screw rod 16 is manipulated to go deep into or be away from the fixing member 10, and the length of the rod fixer 10 may be finely adjusted, so as to achieve the most appropriate use effect.

When it is intended to separate the fixing member 10 from the connecting rod 20, the buckle handle 13 is manipulated to disengage the bead 1323 thereof from the concave portion 1231 of the main locating seat 12, the block 133 is away from the clamping part 213 of the locating block 21, and the connecting rod 20 is moved in a direction close to the fixing member 10, so that after the locating block 21 is disengaged from the main locating seat 12 and the auxiliary locating seat 14 of the fixing member 10, the connecting rod 20 and the fixing member 10 may be separated.

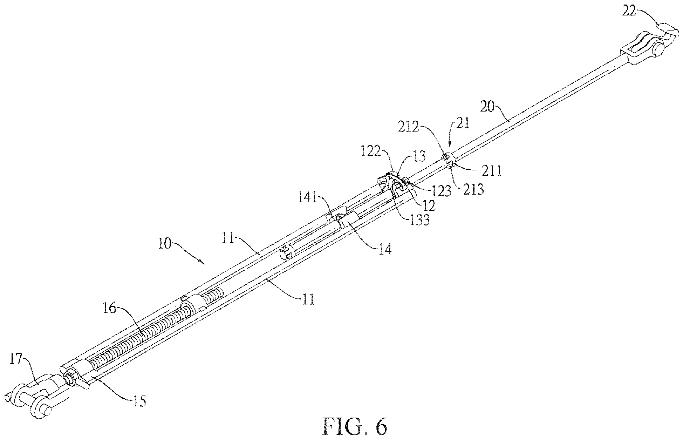

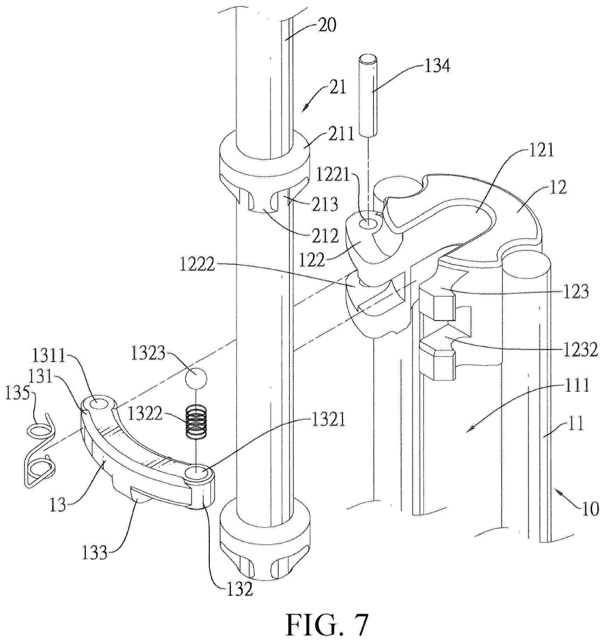

Referring to FIG. 6 to FIG. 7, a second embodiment of the rod fixer for ship containers according to the present invention is shown, which includes a fixing member 10 and a connecting rod 20, in which components of the fixing member 10 are the same as those of the first embodiment, and the difference between the connecting rod 20 and that of the first embodiment lies in that: four ribs 212 are formed between the bottom face of the ring 211 of each locating block 21 and the rod wall of the connecting rod 20, and the clamping part 213 is formed of four grooves between the bottom face of the ring 211 and the ribs 212A.

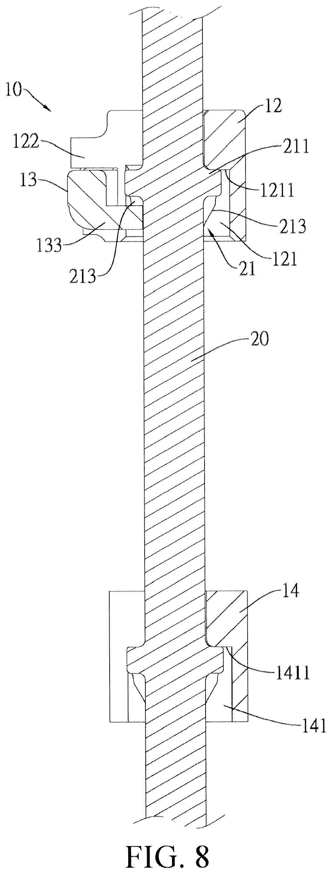

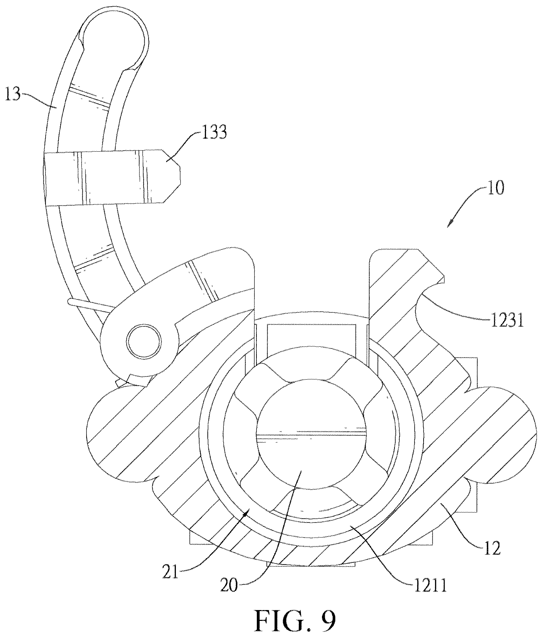

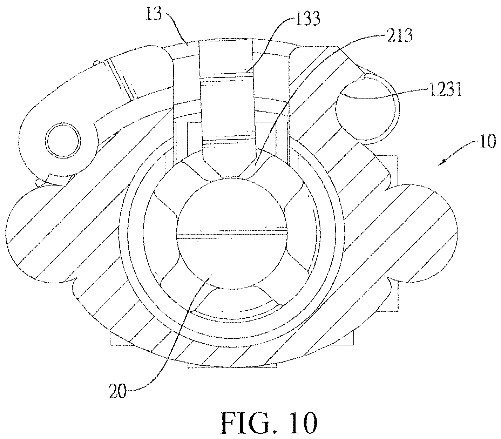

Referring to FIG. 8 and FIG. 9, during practical use of this embodiment, like the first embodiment, the rod bodies of the connecting rod 20 are correspondingly disposed in the via hole 121 of the main locating seat 12 of the fixing member 10 and the via hole 141 of the auxiliary locating seat 14, and the connecting rod 20 is moved in a direction away from the fixing member 10, so that different locating blocks 21 may separately abut against the step face 1211 of the via hole 121 of the main locating seat 12 and the step face 1411 of the via hole 141 of the auxiliary locating seat 14. Referring to FIG. 10 cooperatively, the buckle handle 13 is manipulated, so that the block 133 of the buckle handle 13 is correspondingly locked with a clamping part 213 of the locating block 21, and in this way, the locating block 21 is locked into the main locating seat 12, so the connecting rod 20 may be firmly fixed on the fixing member 10 and cannot rotate or move.

When it is intended to separate the fixing member 10 from the connecting rod 20, like the first embodiment, the buckle handle 13 is manipulated to disengage the bead 1323 thereof from the concave portion 1231 of the main locating seat 12, the block 133 is away from the clamping part 213A of the locating block 21, and the connecting rod 20 is moved in a direction close to the fixing member 10, so that after the locating block 21 is disengaged from the main locating seat 12 and the auxiliary locating seat 14 of the fixing member 10, the connecting rod 20 and the fixing member 10 may be separated.

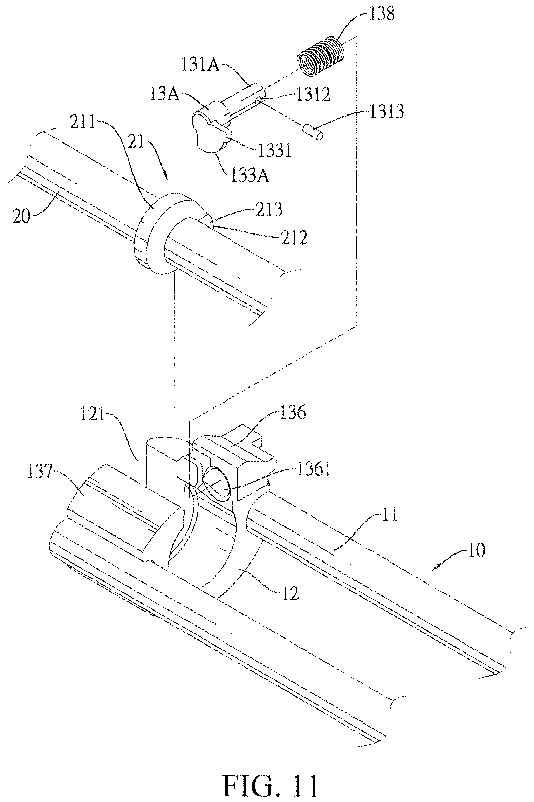

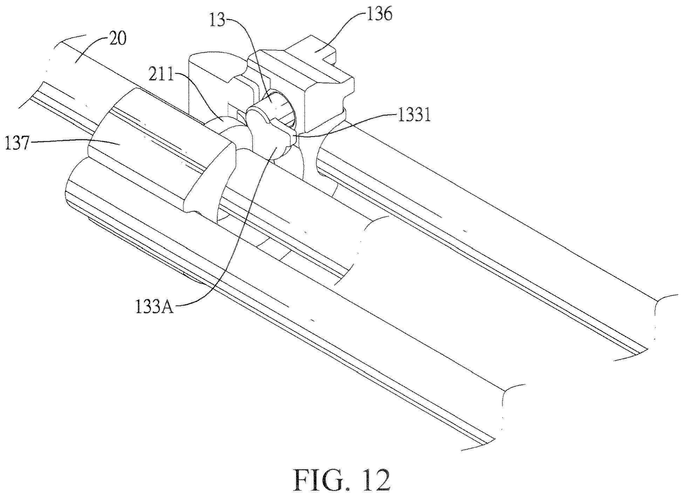

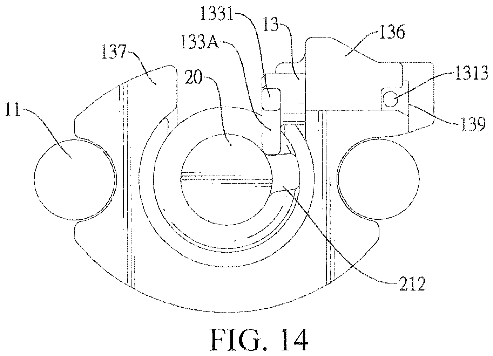

Referring to FIG. 11 to FIG. 14, a third embodiment of a rod fixer for ship containers according to the present invention is shown, which includes a fixing member 10 and a connecting rod 20.

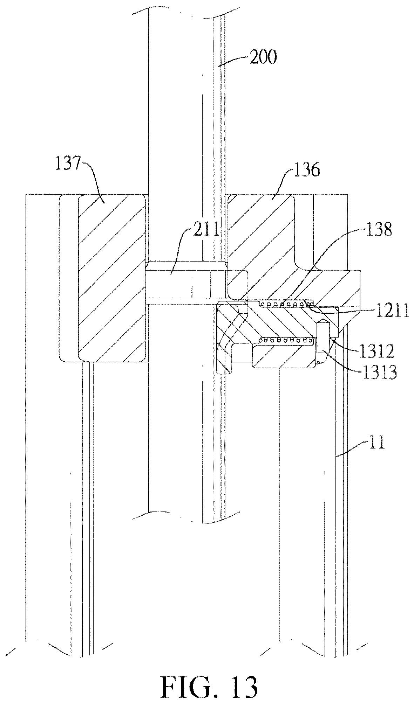

The fixing member 10 is provided with two rod bodies 11 disposed in parallel and at an interval, the top end of the two rod bodies 11 is connected with a main locating seat 12, the main locating seat 12 is formed with an axial via hole 121, the via hole 121 faces the front side and is of an opening shape, and the main locating seat 12 is formed with a fastening element. In this embodiment, the fastening element enables the main locating seat 12 to be formed with a pivoting part 136 and an abutting part 137. The pivoting part 136 is provided with a transverse containing hole 1361 relative to the end face of the via hole 121 of the abutting part 137, the pivoting part 136 is pivoted with a buckle handle 13A, one end of the buckle handle 13A is a pivoting end 131 A, the buckle handle 13A is protruded with a block 133A, one end of the pivoting end 131A is provided with a radial concave hole 1312, the concave hole 1312 is capable of being inserted with an abutting column 1313, the abutting column 1313 is capable of passing through an abutting through hole 139 at a lower end face of the pivoting part 136 and is inserted and fixed in the concave hole 1312, the pivoting end 131A is sleeved with an abutting spring 138, the abutting column 1313 is capable of compressing the abutting spring 138 and is located at the pivoting end 131A, the appearance of the block 133A of the buckle handle 13A is approximately of a shape of one fourth circular sheet, and one end of the block is protruded with a dialing block 1331, the pivoting end 131A of the buckle handle 13 and the abutting spring 138 are disposed in the containing hole 1361, and the block 133A of the buckle handle 13 is located in the via hole 121. The upper end aperture of the via hole 121 is less than the lower end aperture, and a step face 1211 is formed between the upper and lower end apertures (as shown in FIG. 13).

The structure of the connecting rod 20 is the same as that in the first embodiment, which is a rod body, the rod wall thereof is protruded with a plurality of locating blocks 21 axially at intervals, each of the locating blocks 21 is provided with a ring 211, a rib 212 is formed between the bottom face of the ring 211 and the rod wall of the connecting rod 20, and a clamping part 213 is formed between the bottom face of the ring 211 and the rib 212.

During practical use of this embodiment, first the dialing block 1331 of the buckle handle 13A is dialed upward, so that the block 133A does not influence the entry of the locating block 21 into the via hole 121; then same as the above embodiment, rod bodies of the connecting rod 20 are correspondingly disposed in the via hole 121 of the main locating seat 12 of the fixing member 10 and the via hole 141 of the auxiliary locating seat 14, and the connecting rod 20 is moved in a direction away from the fixing member 10, so that different locating blocks 21 may separately abut against the step face 1211 of the via hole 121 of the main locating seat 12 and the step face 1411 of the via hole 141 of the auxiliary locating seat 14; then the dialing block 1331 of the buckle handle 13A is loosened, so that the block 133A restores to the original location due to the elasticity of the abutting spring 138; the block 133A of the buckle handle 13 is correspondingly locked into the clamping part 213 of the locating block 21, so the locating block 21 is locked into the main locating seat 12.

When it is intended to separate the fixing member 10 from the connecting rod 20, first the dialing block 1331 of the buckle handle 13A is upward dialed, so that the block 133A does not hinder retreat of the locating block 21 and disengagement thereof from the via hole 121; the connecting rod 20 is moved in a direction close to the fixing member 10, so that after the locating block 21 is disengaged from the main locating seat 12 and the auxiliary locating seat 14 of the fixing member 10, the connecting rod 20 and the fixing member 10 may be separated; then the dialing block 1331 of the buckle handle 13A is loosened, so that the block 133A restores to the original location due to the elasticity of the abutting spring 138.

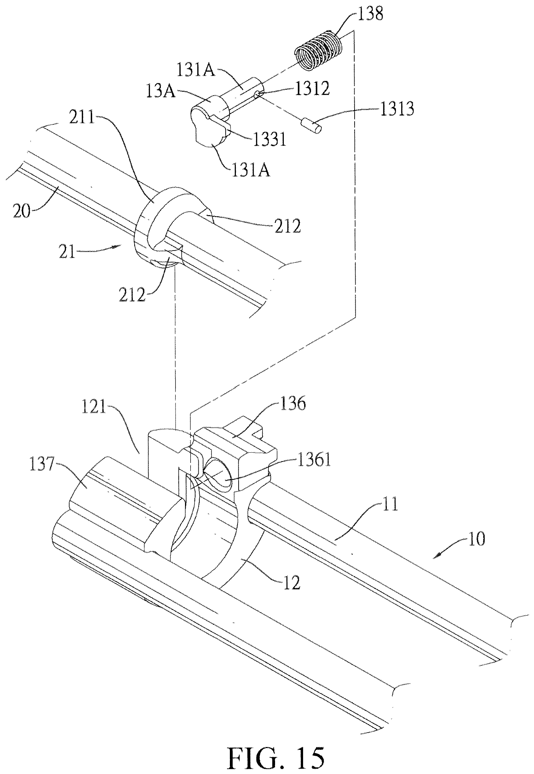

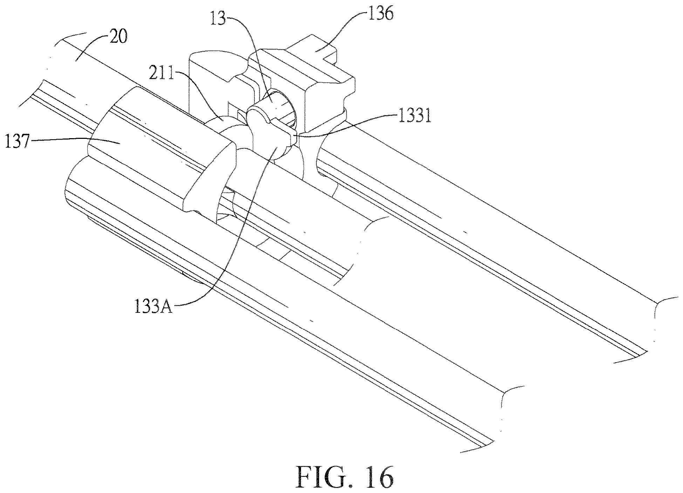

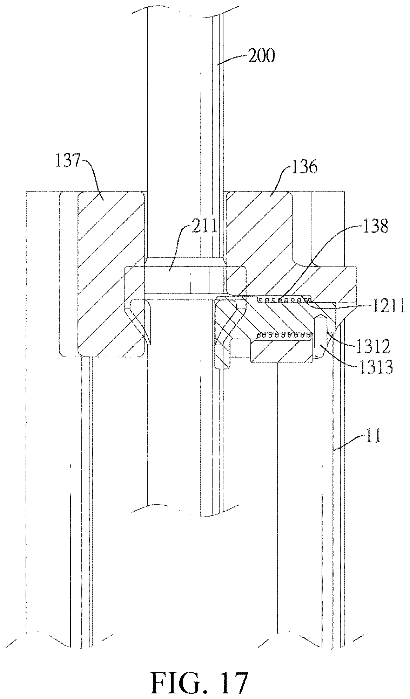

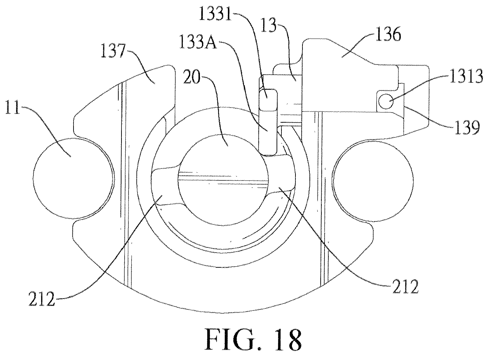

Referring to FIG. 15 to FIG. 18, a fourth embodiment of a rod fixer for ship containers according to the present invention is shown, which includes a fixing member 10 and a connecting rod 20. The structure of the fixing member 10 is the same as that in the third embodiment, and the main difference only lies in that: two opposite ribs 212 are formed between the bottom face of the ring 211 of a plurality of locating blocks 21 on the connection block 20 and the rod wall of the connecting rod 20, so that two clamping parts 213 are formed between the bottom face of the ring 211 and the rib 212.

During practical use of this embodiment, the steps combining and separating the fixing member 10 and the connection block 20 are the same as those in the third embodiment, and the only difference is in that: the block 133A of the buckle handle 13A is correspondingly locked with one of the two clamping parts 213 of the locating block 21.

For the present invention, the foregoing illustration is only illustrative rather than limitative. Persons having ordinary skill in the art understand that, many modifications, changes, or equivalences can be made without departing from the spirit and the scope limited by the claims, but the modifications, changes, or equivalences all fall within the protection scope of the present invention.

## Claims

1. A rod fixer for ship containers (30), comprising a fixing member (10) and a connecting rod (20), wherein:
the fixing member (10) is provided with a main locating seat (12), the main locating seat (12) is formed with a via hole (121) facing a front side and being of an opening shape, the main locating seat (12) is provided with a fastening element provided with a block (133, 133A), and an upper end aperture of the via hole (121) is less than a lower end aperture thereof; and
a rod wall of the connecting rod (20) is protruded with a plurality of locating blocks (21) at intervals, each locating block (21) is formed with at least one clamping part (213), the connecting rod (20) is sleeved in the fixing member (10), and the block (133, 133A) of the fastening element is locked into the clamping part (213) of the locating block (21).

2. The rod fixer for ship containers (30) according to claim 1, wherein: the main locating seat (12) is formed with a pivoting part (122, 136) and an abutting part (123, 137), the pivoting part (122, 136) is pivoted with a buckle handle (13, 13A), the buckle handle (13, 13A) is protruded with the block (133, 133A), and a step face (1211) is formed between the upper end aperture and the lower end aperture of the via hole (121), so that a locating block (21) is located in the via hole (121) of the main locating seat (12) and abuts against the step face (1211) of the via hole (121).

3. The rod fixer for ship containers (30) according to claim 2, wherein: an end face of the pivoting part (122) of the main locating seat (12) is penetrated with a combining hole (1221), the front side of the pivoting part (122) is cut to form a groove (1222), the groove (1222) is in communication with the combining hole (1221), one end of the buckle handle (13, 13A) is a pivoting end (131, 131A), the other end is an abutting end (132), the pivoting end (131, 131A) is penetrated with a pivoting hole (1311), and the pivoting end (131, 131A) is located in the groove (1222) of the main locating seat (12), so that the pivoting hole (1311) of the pivoting end (131, 131A) corresponds to the combining hole (1221) of the main locating seat (12), a pivoting member (134) runs through the combining hole (1221) of the main locating seat (12) and is pivoted with the pivoting hole (1311) of the pivoting end (131, 131 A), and the abutting end (132) at the other end of the buckle handle (13, 13A) is located at the abutting part of the main locating seat (12).

4. The rod fixer for ship containers (30) according to claim 3, wherein: the pivoting member (134) and the outside of the pivoting end (131) of the buckle handle (13) are disposed with a torsion spring (135), the torsion spring (134) straddles the outside of the pivoting end (131), two ends of the torsion spring (134) separately wind the outside of the top end and the bottom end of the pivoting member (134), and the two ends of the torsion spring (134) abut against grooves (1321) face of the groove (1222).

5. The rod fixer for ship containers (30) according to claim 3, wherein: the abutting part (123) of the main locating seat (12) is recessed to form a concave portion (1231) relative to the external side away from the via hole (121), the front side of the abutting part (123) is cut to form a slot, the abutting end (132) of the buckle handle (13) is located in the slot of the main locating seat (12), the top face of the end portion of the abutting end (132) is recessed with a groove (1321), the groove (1321) sequentially contains a spring (1322) and a bead (1323), and the bead (1323) is capable of clamping the concave portion (1231) located in main locating seat (12).

6. The rod fixer for ship containers (30) according to claim 4, wherein: the abutting part (123) of the main locating seat (12) is recessed to form a concave portion (1231) relative to the external side away from the via hole (121), the front side of the abutting part (123) is cut to form a slot (1232), the abutting end (132) of the buckle handle (13, 13A) is located in the slot of the main locating seat (12), the top face of the end portion of the abutting end (132) is recessed with a groove (1321), the groove (1321) sequentially contains a spring (1322) and a bead (1323), and the bead (1323) is capable of clamping the concave portion (1231) located in main locating seat (12).

7. The rod fixer for ship containers (30) according to any one of claims 1 to 6, wherein:
the locating block (21) of the connecting rod (20) is provided with a ring (211), at least one rib (212) is formed between the bottom face of the ring (211) and the rod wall of the connecting rod (20), and the clamping part (213) is formed between the rib (212) and the bottom face of the ring (211).

8. The rod fixer for ship containers (30) according to claim 7, wherein: the fixing member (10) is further provided with an auxiliary locating seat (14), the auxiliary locating seat (14) is formed with a via hole (141) facing a front side and being of an opening shape, an upper end aperture of the via hole (141) of the auxiliary locating seat (14) is less than a lower end aperture thereof, and a step face (1411) is formed between the upper end aperture and the lower end aperture, the via hole (141) of the auxiliary locating seat (14) contains a corresponding locating block (21), and the step face (1411) of the auxiliary locating seat (14) is capable of abutting against the corresponding locating block (21).

9. The rod fixer for ship containers (30) according to claim 8, wherein: the fixing member (10) is provided with two rod bodies (11) disposed at an interval, top ends of the two rod bodies (11) are connected with the main locating seat (12), and the auxiliary locating seat (14) is connected between the two rod bodies (11) and below the main locating seat (12).

10. The rod fixer for ship containers (30) according to claim 9, wherein: bottom ends of the two rod bodies (11) of the fixing member (10) are connected with a connection seat (15), the connection seat (15) is penetrated with a screw hole, the screw hole is combined with a screw rod (16), the bottom end of the screw rod (16) is provided with a connecting part (17), and the top end of the connecting rod (20) is provided with a hook (22).

11. The rod fixer for ship containers (30) according to claim 2, wherein: the pivoting part (136) of the main locating seat (12) is provided with a transverse containing hole (1361) relative to the end face of the via hole (121) of the abutting part (137), the pivoting part (136) is pivoted with a buckle handle (13A), one end of the buckle handle (13A) is a pivoting end (131A), the buckle handle (13A) is protruded with the block (133A), one end of the pivoting end (131A) is provided with a radial concave hole (1312), the concave hole (1312) is capable of being inserted with an abutting column (1313), the abutting column (1313) is capable of passing through an abutting through hole (139) at a lower end face of the pivoting part (136) and is inserted and fixed in the concave hole (1312), the pivoting end (131A) is sleeved with an abutting spring (138), the abutting column (1313) is capable of compressing the abutting spring (138) and is located at the pivoting end (131A), the appearance of the block (133A) of the buckle handle (13A) is approximately of a shape of one fourth circular sheet, and one end of the block (133A) is protruded with a dialing block (1331), the pivoting end (131A) of the buckle handle (13A) and the abutting spring (138) are disposed in the containing hole (1361), and the block (133A) of the buckle handle (13A) is located in the via hole.

12. The rod fixer for ship containers (30) according to claim 11, wherein: the locating block (21) of the connecting rod (20) is provided with a ring (211), a plurality of ribs (212) is formed between the bottom face of the ring (211) and the rod wall of the connecting rod (20), and the clamping part (213) is formed between adjacent ribs (212).

13. The rod fixer for ship containers (30) according to claim 11 or 12, wherein: the fixing member (10) is further provided with an auxiliary locating seat (14), the auxiliary locating seat (14) is formed with a via hole (141) facing a front side and being of an opening shape, an upper end aperture of the via hole (141) of the auxiliary locating seat (14) is less than a lower end aperture thereof, and a step face (1411) is formed between the upper end aperture and the lower end aperture, the via hole (141) of the auxiliary locating seat (14) contains a corresponding locating block (21), and the step face (1411) of the auxiliary locating seat (14) is capable of abutting against the corresponding locating block (21).

14. The rod fixer for ship containers (30) according to claim 13, wherein: the fixing member (10) is provided with two rod bodies (11) disposed at an interval, top ends of the two rod bodies (11) are connected with the main locating seat (12), and the auxiliary locating seat is connected between the two rod bodies (11) and below the main locating seat (12).

15. The rod fixer for ship containers (30) according to claim 14, wherein: bottom ends of the two rod bodies (11) of the fixing member (10) are connected with a connection seat (15), the connection (15) seat is penetrated with a screw hole, the screw hole is combined with a screw rod (16), the bottom end of the screw rod (16) is provided with a connecting part (17), and the top end of the connecting rod (20) is provided with a hook (22).

## Patentansprüche

1. Stangen-Fixiervorrichtung (30) für Schiffscontainer, die ein Fixierelement (10) und eine Verbindungsstange (20) umfasst, wobei:
das Fixierelement (10) mit einer Haupt-Positionieraufnahme (12) versehen ist, in der Haupt-Positionieraufnahme (12) ein Durchgangsloch (121) ausgebildet ist, das einer Vorderseite zugewandt ist und die Form einer Öffnung hat, die Haupt-Positionieraufnahme (12) mit einem Befestigungselement versehen ist, das mit einem Block (133, 133A) versehen ist, und eine Lochöffnung am oberen Ende des Durchgangslochs (121) kleiner ist als eine Lochöffnung am unteren Ende desselben; und
von einer Stangenwand der Verbindungsstange (20) eine Vielzahl von Positionierblöcken (21) in Abständen vorstehen, wobei jeder Positionierblock (21) mit wenigstens einem Klemmteil (213) versehen ist, die Verbindungsstange (20) von dem Fixierelement (10) umhüllt wird und der Block (133, 133A) des Befestigungselementes in dem Klemmteil (213) des Positionierblocks (21) arretiert ist.

2. Stangen-Fixiervorrichtung (30) für Schiffscontainer nach Anspruch 1, wobei die Haupt-Positionieraufnahme (12) mit einem Schwenkteil (122, 136) sowie einem Anliegeteil (123, 137) versehen ist, der Schwenkteil (122, 136) mit einem Schließgriff (13, 13A) geschwenkt wird, von dem Schließgriff (13, 13A) der Block (133, 133A) vorsteht und eine Absatzfläche (1211) zwischen der Lochöffnung am oberen Ende und der Lochöffnung am unteren Ende des Durchgangslochs (121) so ausgebildet ist, dass sich ein Positionierblock (21) in dem Durchgangsloch (121) der Haupt-Positionieraufnahme (12) befindet und an der Absatzfläche (1211) des Durchgangslochs (121) anliegt.

3. Stangen-Fixiervorrichtung (30) für Schiffscontainer nach Anspruch 2, wobei durch eine Endfläche des Schwenkteils (122) der Haupt-Positionieraufnahme (12) ein Verbindungs-Loch (1221) hindurch verläuft, die vordere Seite des Schwenkteils (122) ausgeschnitten ist, so dass eine Nut (1222) gebildet wird, die Nut (1222) in Verbindung mit dem Verbindungsloch (1221) steht, ein Ende des Schließgriffs (13, 13A) ein Schwenk-Ende (131, 131A) ist, das andere Ende ein Anliege-Ende (132) ist, durch das Schwenk-Ende (131, 131A) ein Schwenk-Loch (1311) hindurch verläuft und sich das Schwenk-Ende (131, 131A) in der Nut (1222) der Haupt-Positionieraufnahme (12) befindet, so dass das Schwenk-Loch (1311) des Schwenk-Endes (131, 131A) dem Verbindungs-Loch der Haupt-Positionieraufnahme (12) entspricht, ein Schwenkelement (134) durch das Verbindungs-Loch (1221) der Haupt-Positionieraufnahme (12) hindurch verläuft und mit dem Schwenk-Loch (1311) des Schwenk-Endes (131, 131A) geschwenkt wird, und sich das Anliege-Ende (132) an dem anderen Ende des Schließ-Griffs (13, 13A) an dem Anliegeteil der Haupt-Positionieraufnahme (12) befindet.

4. Stangen-Fixiervorrichtung (30) für Schiffscontainer nach Anspruch 3, wobei an dem Schwenkelement (134) und der Außenseite des Schwenk-Endes (131) des Schließgriffs (13) eine Torsionsfeder (135) angeordnet ist, sich die Torsionsfeder (134) über die Außenseite des Schwenk-Endes (131) spreizt, zwei Enden der Torsionsfeder (134) separat um die Außenseite des oberen Endes und des unteren Endes des Schwenkelementes (134) gewickelt sind und die zwei Enden der Torsionsfeder (134) an Nuten (1321) anliegen, die der Nut (1222) zugewandt sind.

5. Stangen-Fixiervorrichtung (30) für Schiffscontainer nach Anspruch 3, wobei der Anliegeteil (123) der Haupt-Positionieraufnahme (12) vertieft ist und einen konkaven Abschnitt (1231) relativ zu der äußeren Seite von dem Durchgangsloch (121) weg bildet, die Vorderseite des Anliegeteils (123) ausgeschnitten ist und einen Schlitz bildet, sich das Anliege-Ende (132) des Schließgriffs (13) in dem Schlitz der Haupt-Positionieraufnahme (12) befindet, die obere Fläche des Endabschnitts des Anliege-Endes (132) mit einer Nut (1321) vertieft ist, die Nut aufeinanderfolgend eine Feder (1322) sowie eine Perle (1323) aufnimmt und die Perle (1323) den konkaven Abschnitt (1231) festklemmen kann, der sich in der Haupt-Positionieraufnahme (12) befindet.

6. Stangen-Fixiervorrichtung (30) für Schiffscontainer nach Anspruch 4, wobei der Anliegeteil (123) der Haupt-Positionieraufnahme (12) vertieft ist und einen konkaven Abschnitt (1231) relativ zu der äußeren Seite von dem Durchgangsloch (121) weg bildet, die Vorderseite des Anliegeteils (123) ausgeschnitten ist und einen Schlitz (1232) bildet, sich das Anliege-Ende (132) des Schließgriffs (13, 13A) in dem Schlitz der Haupt-Positionieraufnahme (12) befindet, die obere Fläche des Endabschnitts des Anliege-Endes (132) mit einer Nut (1321) vertieft ist, die Nut aufeinanderfolgend eine Feder (1322) sowie eine Perle (1323) aufnimmt und die Perle (1323) den konkaven Abschnitt (1231) festklemmen kann, der sich in der Haupt-Positionieraufnahme (12) befindet.

7. Stangen-Fixiervorrichtung (30) für Schiffscontainer nach einem der Ansprüche 1 bis 6, wobei der Positionierblock (21) der Verbindungsstange (20) mit einem Ring (211) versehen ist, wenigstens eine Rippe (212) zwischen der unteren Fläche des Rings (211) und der Stangenwand der Verbindungsstange (20) ausgebildet ist und der Klemmteil (213) zwischen der Rippe (212) und der unteren Fläche des Rings (211) ausgebildet ist.

8. Stangen-Fixiervorrichtung (30) für Schiffscontainer nach Anspruch 7, wobei das Fixierelement (10) des Weiteren mit einer Neben-Positionieraufnahme (14) versehen ist, in der Neben-Positionieraufnahme (14) ein Durchgangsloch (141) ausgebildet ist, das einer Vorderseite zugewandt ist und die Form einer Öffnung hat, und eine Lochöffnung am oberen Ende des Durchgangslochs (141) der Neben-Positionieraufnahme (14) kleiner ist als eine Lochöffnung am unteren Ende desselben und eine Absatzfläche (1411) zwischen der Lochöffnung am oberen Ende und der Lochöffnung am unteren Ende ausgebildet ist, das Durchgangsloch (141) der Neben-Positionieraufnahme (14) einen entsprechenden Positionierblock (21) enthält und die Absatzfläche (1411) der Neben-Positionieraufnahme (14) an dem entsprechenden Positionierblock (21) anliegen kann.

9. Stangen-Fixiervorrichtung (30) für Schiffscontainer nach Anspruch 8, wobei das Fixierelement (10) mit zwei Stangenkörpern (11) versehen ist, die in einem Abstand angeordnet sind, obere Enden der zwei Stangenkörper (11) mit der Haupt-Positionieraufnahme (12) verbunden sind und die Neben-Positionieraufnahme (14) zwischen den zwei Stangenkörpern (11) und unterhalb der Haupt-Positionieraufnahme (12) verbunden ist.

10. Stangen-Fixiervorrichtung (30) für Schiffscontainer nach Anspruch 9, wobei untere Enden der zwei Stangenkörper (11) des Fixierelementes (10) mit einer Verbindungsaufnahme (15) verbunden sind, ein Gewindeloch durch die Verbindungsaufnahme (15) hindurch verläuft, das Gewindeloch mit einer Gewindestange (16) verbunden ist, das untere Ende der Gewindestange (16) mit einem Verbindungsteil (17) versehen ist und das obere Ende der Verbindungsstange (20) mit einem Haken (22) versehen ist.

11. Stangen-Fixiervorrichtung (30) für Schiffscontainer nach Anspruch 2, wobei der Schwenkteil (136) der Haupt-Positionieraufnahme (12) mit einem Quer-Aufnahmeloch (1361) relativ zu der Endfläche des Durchgangslochs (121) des Anliegeteils (137) versehen ist, der Schwenkteil (136) mit einem Schließgriff (13A) geschwenkt wird, von dem Schließgriff (13A) der Block (133A) vorsteht, ein Ende des Schwenk-Endes (131A) mit einem radialen konkaven Loch (1312) versehen ist, in das konkave Loch (1312) ein Anliege-Stab (1313) eingeführt werden kann, der Anliege-Stab (1313) durch ein durchgehendes Anliege-Loch (139) an einer unteren Endfläche des Schwenkteils (136) hindurch treten kann und in das konkave Loch (1312) eingeführt und darin fixiert wird, das Schwenk-Ende (131A) von einer Anliege-Feder (131) umhüllt wird, der Anliege-Stab (1313) die Anliege-Feder (138) zusammendrücken kann und sich an dem Schwenk-Ende (131A) befindet, das äußere Erscheinungsbild des Blocks (133A) des Schließgriffs (13A) annähernd eine Form einer Viertelkreisscheibe hat und von einem Ende des Blocks (133A) ein Einstell-Block (1331) vorsteht, das Schwenk-Ende (131A) des Schließgriffs (13A) und die Anliege-Feder (138) in dem Aufnahmeloch (1361) angeordnet sind und sich der Block (133A) des Schließgriffs (13A) in dem Durchgangsloch befindet.

12. Stangen-Fixiervorrichtung (30) für Schiffscontainer nach Anspruch 11, wobei der Positionierblock (21) der Verbindungsstange (20) mit einem Ring (211) versehen ist, eine Vielzahl von Rippen (212) zwischen der unteren Fläche des Rings (211) und der Stangenwand der Verbindungsstange (20) ausgebildet ist und der Klemmteil (213) zwischen benachbarten Rippen (212) ausgebildet ist.

13. Stangen-Fixiervorrichtung (30) für Schiffscontainer nach Anspruch 11 oder 12, wobei das Fixierelement (10) des Weiteren mit einer Neben-Positionieraufnahme (14) versehen ist, in der Neben-Positionieraufnahme (14) ein Durchgangsloch (141) ausgebildet ist, das einer Vorderseite zugewandt ist und die Form einer Öffnung hat, und eine Lochöffnung am oberen Ende des Durchgangslochs (141) der Neben-Positionieraufnahme (14) kleiner ist als eine Lochöffnung am unteren Ende desselben und eine Absatzfläche (1411) zwischen der Lochöffnung am oberen Ende und der Lochöffnung am unteren Ende ausgebildet ist, das Durchgangsloch (141) der Neben-Positionieraufnahme (14) einen entsprechenden Positionierblock (21) enthält und die Absatzfläche (1411) der Neben-Positionieraufnahme (14) an dem entsprechenden Positionierblock (21) anliegen kann.

14. Stangen-Fixiervorrichtung (30) für Schiffscontainer nach Anspruch 13, wobei das Fixierelement (10) mit zwei Stangenkörpern (11) versehen ist, die in einem Abstand angeordnet sind, obere Enden der zwei Stangenkörper (11) mit der Haupt-Positionieraufnahme (12) verbunden sind und die Neben-Positionieraufnahme (14) zwischen den zwei Stangenkörpern (11) und unterhalb der Haupt-Positionieraufnahme (12) verbunden ist.

15. Stangen-Fixiervorrichtung (30) für Schiffscontainer nach Anspruch 14, wobei untere Enden der zwei Stangenkörper (11) des Fixierelementes (10) mit einer Verbindungsaufnahme (15) verbunden sind, ein Gewindeloch durch die Verbindungsaufnahme (15) hindurch verläuft, das Gewindeloch mit einer Gewindestange (16) verbunden ist, das untere Ende der Gewindestange (16) mit einem Verbindungsteil (17) versehen ist und das obere Ende der Verbindungsstange (20) mit einem Haken (22) versehen ist.

## Revendications

1. Dispositif de fixation à tige pour conteneurs de bateau (30), comprenant un organe de fixation (10) et une tige de connexion (20), dans lequel :
l'organe de fixation (10) est pourvu d'un siège de positionnement principal (12), le siège de positionnement principal (12) est formé avec un trou de connexion (121) qui fait face à un côté avant et présente une forme d'ouverture, le siège de positionnement principal (12) est pourvu d'un élément d'attachement pourvu d'un bloc (133, 133A), et une ouverture d'extrémité supérieure du trou de connexion (121) est plus petite qu'une ouverture d'extrémité inférieure correspondante ; et
une paroi de tige de la tige de connexion (20) fait saillie avec une pluralité de blocs de positionnement (21) disposés à intervalles, chaque bloc de positionnement (21) est formé avec au moins une partie de serrage (213), la tige de connexion (20) est manchonnée dans l'organe de fixation (10), et le bloc (133, 133A) de l'élément d'attachement est verrouillé dans la partie de serrage (213) du bloc de positionnement (21).

2. Dispositif de fixation à tige pour conteneurs de bateau (30) selon la revendication 1, dans lequel :
le siège de positionnement principal (12) est formé avec une partie pivotante (122, 136) et une partie de butée (123, 137), la partie pivotante (122, 136) est pivotée avec une poignée de fermoir (13, 13A), la poignée de fermoir (13, 13A) présente une saillie avec le bloc (133, 133A), et une face d'échelon (1211) est formée entre l'ouverture d'extrémité supérieure et l'ouverture d'extrémité inférieure du trou de connexion (121), de telle sorte qu'un bloc de positionnement (21) est positionné dans le trou de connexion (121) du siège de positionnement principal (12) et vient à butée contre la face d'échelon (1211) du trou de connexion (121).

3. Dispositif de fixation à tige pour conteneurs de bateau (30) selon la revendication 2, dans lequel :
une face terminale de la partie pivotante (122) du siège de positionnement principal (12) est traversée par un trou de combinaison (1221), le côté avant de la partie pivotante (122) est découpé pour former une rainure (1222), la rainure (1222) est en communication avec le trou de combinaison (1221), une extrémité de la poignée de fermoir (13, 13A) est une extrémité pivotante (131, 131A), l'autre extrémité est une extrémité de butée (132), l'extrémité pivotante (131, 131A) est traversée par un trou de pivotement (1311), et l'extrémité pivotante (131, 131A) est positionnée dans la rainure (1222) du siège de positionnement principal (12), de telle sorte que le trou de pivotement (1311) de l'extrémité pivotante (131, 131A) correspond au trou de combinaison (1221) du siège de positionnement principal (12), un élément de pivotement (134) traverse le trou de combinaison (1221) du siège de positionnement principal (12) et est pivoté avec le trou de pivotement (1311) de l'extrémité pivotante (131, 131A), et l'extrémité de butée (132) à l'autre extrémité de la poignée de fermoir (13, 13A) est positionnée sur la partie de butée du siège de positionnement principal (12).

4. Dispositif de fixation à tige pour conteneurs de bateau (30) selon la revendication 3, dans lequel :
l'élément de pivotement (134) et l'extérieur de l'extrémité pivotante (131) de la poignée de fermoir (13) sont agencés avec un ressort de torsion (135), le ressort de torsion (134) enjambe l'extérieur de l'extrémité pivotante (131), deux extrémités du ressort de torsion (134) s'enroulent séparément autour de l'extérieur de l'extrémité supérieure et de l'extrémité inférieure de l'élément de pivotement (134), et les deux extrémités du ressort de torsion (134) viennent à butée contre la face de la rainure (1321) et de la rainure (1222).

5. Dispositif de fixation à tige pour conteneurs de bateau (30) selon la revendication 3, dans lequel :
la partie de butée (123) du siège de positionnement principal (12) est renfoncée pour former une portion concave (1231) par rapport au côté externe éloigné du trou de connexion (121), le côté avant de la partie de butée (123) est découpé pour former une fente, l'extrémité de butée (132) de la poignée de fermoir (13) est positionnée dans la fente du siège de positionnement principal (12), la face supérieure de la portion d'extrémité de l'extrémité de butée (132) est renfoncée avec une rainure (1321), la rainure (1321) contient séquentiellement un ressort (1322) et un cordon (1323), et le cordon (1323) est capable de serrer la portion concave (1231) positionnée dans le siège de positionnement principal (12).

6. Dispositif de fixation à tige pour conteneurs de bateau (30) selon la revendication 4, dans lequel :
la partie de butée (123) du siège de positionnement principal (12) est renfoncée pour former une portion concave (1231) par rapport au côté externe éloigné du trou de connexion (121), le côté avant de la partie de butée (123) est découpé pour former une fente (1232), l'extrémité de butée (132) de la poignée de fermoir (13, 13A) est positionnée dans la fente du siège de positionnement principal (12), la face supérieure de la portion d'extrémité de l'extrémité de butée (132) est renfoncée avec une rainure (1321), la rainure (1321) contient séquentiellement un ressort (1322) et un cordon (1323), et le cordon (1323) est capable de serrer la portion concave (1231) positionnée dans le siège de positionnement principal (12).

7. Dispositif de fixation à tige pour conteneurs de bateau (30) selon l'une quelconque des revendications 1 à 6, dans lequel : le bloc de positionnement (21) de la tige de connexion (20) est pourvu d'un anneau (211), au moins une nervure (212) est formée entre la face inférieure de l'anneau (211) et la paroi de tige de la tige de connexion (20), et la partie de serrage (213) est formée entre la nervure (212) et la face inférieure de l'anneau (211).

8. Dispositif de fixation à tige pour conteneurs de bateau (30) selon la revendication 7, dans lequel :
l'organe de fixation (10) est pourvu en outre d'un siège de positionnement auxiliaire (14), le siège de positionnement auxiliaire (14) est formé avec un trou de connexion (141) qui fait face à un côté avant et présentant une forme d'ouverture, une ouverture d'extrémité supérieure du trou de connexion (141) du siège de positionnement auxiliaire (14) est plus petite qu'une ouverture d'extrémité inférieure correspondante, et une face d'échelon (1411) est formée entre l'ouverture d'extrémité supérieure et l'ouverture d'extrémité inférieure, le trou de connexion (141) du siège de positionnement auxiliaire (14) contient un bloc de positionnement (21) correspondant, et la face d'échelon (1411) du siège de positionnement auxiliaire (14) peut venir à butée contre le bloc de positionnement (21) correspondant.

9. Dispositif de fixation à tige pour conteneurs de bateau (30) selon la revendication 8, dans lequel :
l'organe de fixation (10) est pourvu de deux corps de tige (11) disposés avec un intervalle, des extrémités supérieures des deux corps de tige (11) sont connectées au siège de positionnement principal (12), et le siège de positionnement auxiliaire (14) est connecté entre les deux corps de tige (11) et sous le siège de positionnement principal (12).

10. Dispositif de fixation à tige pour conteneurs de bateau (30) selon la revendication 9, dans lequel :
des extrémités inférieures des deux corps de tige (11) de l'organe de fixation (10) sont connectées à un siège de connexion (15), le siège de connexion (15) est traversé par un trou fileté, le trou fileté est combiné à une tige filetée (16), l'extrémité inférieure de la tige filetée (16) est pourvue d'une partie de connexion (17), et l'extrémité supérieure de la tige de connexion (20) est pourvue d'un crochet (22).

11. Dispositif de fixation à tige pour conteneurs de bateau (30) selon la revendication 2, dans lequel :
la partie pivotante (136) du siège de positionnement principal (12) est pourvue d'un trou de réception (1361) transversal par rapport à la face terminale du trou de connexion (121) de la partie de butée (137), la partie pivotante (136) est pivotée avec une poignée de fermoir (13A), une extrémité de la poignée de fermoir (13A) est une extrémité pivotante (131A), la poignée de fermoir (13A) présente une saillie avec le bloc (133A), une extrémité de l'extrémité pivotante (131A) est pourvue d'un trou concave radial (1312), une colonne de butée (1313) peut être insérée dans le trou concave (1312), la colonne de butée (1313) peut traverser un trou traversant de butée (139) sur une face terminale inférieure de la partie pivotante (136) et est insérée et fixée dans le trou concave (1312), l'extrémité pivotante (131A) est manchonnée avec un ressort de butée (138), la colonne de butée (1313) peut compresser le ressort de butée (138) et est positionnée sur l'extrémité pivotante (131A), l'aspect du bloc (133A) de la poignée de fermoir (13A) présente approximativement une forme de plaque à quart de cercle, et une extrémité du bloc (133A) fait saillie avec un bloc de numérotation (1331), l'extrémité pivotante (131A) de la poignée de fermoir (13A) et le ressort de butée (138) sont disposés dans le trou de réception (1361), et le bloc (133A) de la poignée de fermoir (13A) est positionné dans le trou de connexion.

12. Dispositif de fixation à tige pour conteneurs de bateau (30) selon la revendication 11, dans lequel :
le bloc de positionnement (21) de la tige de connexion (20) est pourvu d'un anneau (211), une pluralité de nervures (212) est formée entre la face inférieure de l'anneau (211) et la paroi de tige de la tige de connexion (20), et la partie de serrage (213) est formée entre des nervures adjacentes (212).

13. Dispositif de fixation à tige pour conteneurs de bateau (30) selon la revendication 11 ou 12, dans lequel : l'organe de fixation (10) est pourvu en outre d'un siège de positionnement auxiliaire (14), le siège de positionnement auxiliaire (14) est formé avec un trou de connexion (141) qui fait face à un côté avant et présente une forme d'ouverture, une ouverture d'extrémité supérieure du trou de connexion (141) du siège de positionnement auxiliaire (14) est plus petite qu'une ouverture d'extrémité inférieure correspondante, et une face d'échelon (1411) est formée entre l'ouverture d'extrémité supérieure et l'ouverture d'extrémité inférieure, le trou de connexion (141) du siège de positionnement auxiliaire (14) contient un bloc de positionnement (21) correspondant, et la face d'échelon (1411) du siège de positionnement auxiliaire (14) est capable de venir à butée contre le bloc de positionnement (21) correspondant.

14. Dispositif de fixation à tige pour conteneurs de bateau (30) selon la revendication 13, dans lequel :
l'organe de fixation (10) est pourvu de deux corps de tige (11) disposés avec un intervalle, des extrémités supérieures des deux corps de tige (11) sont connectées au siège de positionnement principal (12), et le siège de positionnement auxiliaire est connecté entre les deux corps de tige (11) et sous le siège de positionnement principal (12).

15. Dispositif de fixation à tige pour conteneurs de bateau (30) selon la revendication 14, dans lequel :
des extrémités inférieures des deux corps de tige (11) de l'organe de fixation (10) sont connectées à un siège de connexion (15), le siège de connexion (15) est traversé par un trou fileté, le trou fileté est combiné à une tige filetée (16), l'extrémité inférieure de la tige filetée (16) est pourvue d'une partie de connexion (17), et l'extrémité supérieure de la tige de connexion (20) est pourvue d'un crochet (22).
